# EUROPEAN PATENT APPLICATION

(11) **EP 3 952 496 A1**
(43) Date of publication of application: **09.02.2022**
(21) Application number: 19922529.3
(22) Date of filing: 29.03.2019
(51) Int. Cl.: H04W 72/02, H04W 72/04, H04W 74/08

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/014322
(87) International publication number: WO 2020/202389

(57) **Abstract**

An aspect of a user terminal of the present disclosure includes: a control section that decides an uplink shared channel resource to be used in a two-step random access procedure in consideration of a position of a given area in a time direction; and a transmitting section that transmits a first message by using the decided uplink shared channel resource and a preamble.

## Description

### Technical Field

The present disclosure relates to user terminal and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In the existing LTE system (for example, LTE Rel. 8 to 13), user equipment (UE) controls reception of a downlink shared channel (for example, physical downlink shared channel (PDSCH)) on the basis of downlink control information ((DCI), also referred to as DL assignment or the like) from a radio base station. Further, the UE controls transmission of an uplink shared channel (for example, physical uplink shared channel (PUSCH)) on the basis of DCI (also referred to as UL grant).

Further, in the existing LTE system, when UL synchronization is established between the radio base station and the user terminal, UL data can be transmitted from the user terminal. Therefore, the existing LTE systems support random access procedures (referred to as random access channel (RACH) procedures or access procedure) for establishing UL synchronization.

The random access procedure for the existing LTE system supports four steps (messages 1 to 4). For example, in the random access procedure, the user terminal transmits a random access preamble (PRACH) corresponding to the message 1 to the base station, and acquires information on UL transmission timing by a response signal (random access response or message 2) from the radio base station for the PRACH. Thereafter, the user terminal transmits the message (message 3) on an uplink shared channel on the basis of the information acquired by the message 2, and then receives the message 4 (also called contention-resolution) transmitted from the base station.

### Citation List

### Non Patent Literature

Non Patent Literature 1: 3GPP TS 36.300 V8.12.0 "Evolved
Universal Terrestrial Radio Access (E-UTRA) and Evolved
Universal Terrestrial Radio Access Network (E-UTRAN);
Overall description; Stage 2 (Release 8)", April, 2010

### Summary of Invention

### Technical Problem

In future radio communication systems (for example, NR, 5G, 5G+, or Rel. 16 or later), communication using beam forming (BF) has been under study. For example, it is assumed that the UE and the base station use at least one of a plurality of transmission/reception points and a plurality of beams to transmit/receive a signal (or channel).

Further, in the future radio communication system, it is conceivable that the random access procedure is performed in fewer steps (for example, two steps) than the existing four steps.

However, in the future radio communication system, how to control the random access procedure using fewer steps than the existing four steps becomes a problem, but the specific operation and the like have not been sufficiently examined. When the random access procedure is not performed appropriately, the quality of communication is likely to deteriorate.

The present disclosure has been made in view of such a situation, and an object of the present disclosure is to provide a user terminal and a radio communication method capable of appropriately performing communication even when a random access procedure is performed in fewer steps than the existing steps.

### Solution to Problem

A user terminal according to an aspect of the present disclosure includes: a control section that decides an uplink shared channel resource to be used in a two-step random access procedure in consideration of a position of a given area in a time direction; and a transmitting section that transmits a first message by using the decided uplink shared channel resource and a preamble.

### Advantageous Effects of Invention

According to one aspect of the present disclosure, the communication can be appropriately performed even when the random access procedure is performed in fewer steps than the existing steps.

### Brief Description of Drawings

Fig. 1 is a diagram illustrating an example of four-step RACH.
Fig. 2 is a diagram illustrating an example of two-step RACH.
Fig. 3 is a diagram illustrating another example of the two-step RACH.
Figs. 4A to 4C are diagrams illustrating an example of determination of validity of a PUSCH according to a first aspect.
Figs. 5A to 5C are diagrams illustrating another example of the determination of the validity of the PUSCH according to the first aspect.
Figs. 6A and 6B are diagrams illustrating an example of mapping of a preamble and a PUSCH resource according to a second aspect.
Fig. 7 is a diagram illustrating another example of the mapping of the preamble and the PUSCH resource according to the second aspect.
Fig. 8 is a diagram illustrating an example of mapping between a preamble and a PUSCH resource according to a third aspect.
Fig. 9 is a diagram illustrating an example of mapping between a preamble and a PUSCH resource according to a fourth aspect.
Fig. 10 is a diagram illustrating an example of a schematic configuration of a radio communication system according to one embodiment.
Fig. 11 is a diagram illustrating an example of a configuration of a base station according to one embodiment.
Fig. 12 is a diagram illustrating an example of a configuration of a user terminal according to one embodiment.
Fig. 13 is a diagram illustrating an example of a hardware configuration of the base station and the user terminal according to one embodiment.

### Description of Embodiments

Existing LTE systems (for example, LTE Rel. 8 to 13) support a random access procedure for establishing UL synchronization. The random access procedure includes a contention-based random access (also referred to as CBRA or the like) and a non-contention based random access (also referred to as non-CBRA, contention-free random access (CFRA), or the like).

In the contention-based random access (CBRA), a user terminal transmits a randomly selected preamble from a plurality of preambles (also referred to as a random access preamble, a random access channel (physical random access channel (PRACH)), RACH preamble, and the like) defined in each cell. Further, the contention-based random access is a user terminal-driven random access procedure, and can be used, for example, at the time of an initial access, at the time of starting or resuming UL transmission, and the like.

On the other hand, in the non-contention based random access (Non-CBRA, CFRA), the radio base station allocates the preamble to the user terminal by a downlink (DL) control channel (physical downlink control channel (PDCCH)), and the user terminal transmits the preamble allocated from the radio base station. The non-contention based random access is a network-driven random access procedure, and can be used, for example, at the time of handover, at the time of starting or resuming DL transmission (at the time of starting or resuming transmission of DL retransmission instruction information in UL), or the like.

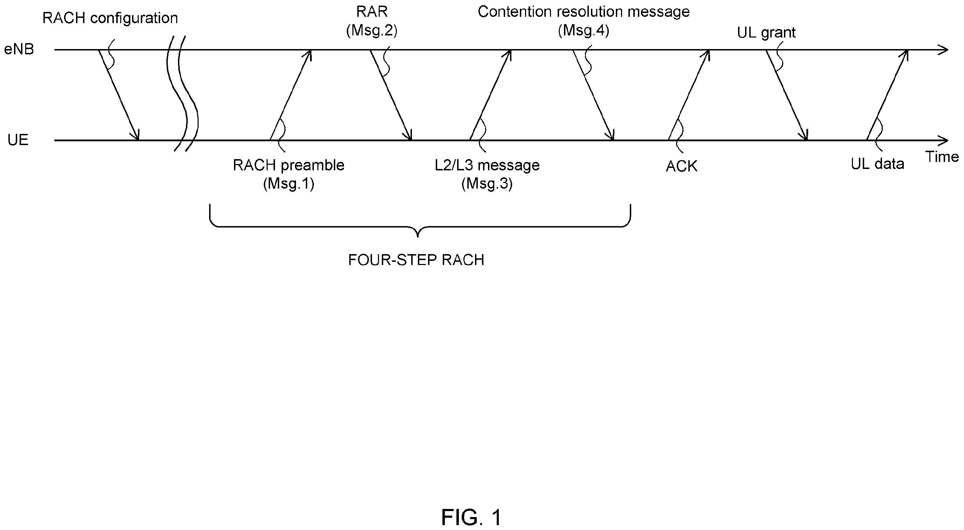

Fig. 1 is a diagram illustrating an example of a contention-based random access. In Fig. 1, the user terminal receives in advance information (PRACH configuration information) indicating a configuration (PRACH configuration and RACH configuration) of a random access channel (PRACH) by system information (for example, mater information block (MIB) and/or system information block (SIB)) or higher layer signaling (for example, radio resource control (RRC) signaling).

The PRACH configuration information can indicate, for example, a plurality of preambles (for example, preamble format) defined in each cell, time resources (for example, system frame number and subframe number) and frequency resources (for example, offset (prach-FrequencyOffset) indicating a starting position of six resource blocks (PRB: Physical Resource Block)) used for PRACH transmission, and the like.

As illustrated in Fig. 1, in a case where the user terminal transitions from an idle (RRC_IDLE) state to an RRC connection (RRC_CONNECTED) state (for example, at the time of an initial access), a case where the user terminal is in the RRC connection state but UL synchronization is not established (for example, at the time of starting or resuming of the UL transmission), or the like, one of a plurality of preambles indicated by the PRACH configuration information is randomly selected, and the selected preamble is transmitted by the PRACH (message 1).

When detecting a preamble, the radio base station transmits a random access response (RAR) as a response (message 2). In a case where the user terminal fails to receive the RAR within a given period (RAR window) after the transmission of the preamble, the transmission power of the PRACH increases, and the preamble is transmitted again (retransmitted). Incidentally, increasing the transmission power at the time of the retransmission is also called power ramping.

The user terminal that receives the RAR adjusts UL transmission timing on the basis of timing advance (TA) included in the RAR, and establishes the UL synchronization. In addition, the user terminal transmits a control message of a higher layer (L2/L3: Layer 2/Layer 3) with the UL resource designated by a UL grant included in the RAR (message 3). The control message includes an identifier (UE-ID) of the user terminal. For example, the identifier of the user terminal may be a cell-radio network temporary identifier (C-RNTI) in the RRC connection state and may be a UE-ID of the higher layer such as a system architecture evolution-temporary mobile subscriber identity (S-TMSI) in the idle state.

The radio base station transmits a contention resolution message in response to the control message of the higher layer (message 4). The contention resolution message is transmitted on the basis of an identifier address of the user terminal included in the control message. The user terminal that succeeds in detecting the contention resolution message transmits acknowledge (ACK) in hybrid automatic repeat request (HARQ) to the radio base station. As a result, the user terminal in the idle state transitions to the RRC connection state.

On the other hand, the user terminal that fails to detect the contention resolution message determines that the contention has occurred, reselects the preamble, and repeats the random access procedures of the messages 1 to 4. When detecting that the contention has been resolved by the ACK from the user terminal, the radio base station transmits the UL grant to the user terminal. The user terminal starts UL data using the UL resources allocated by the UL Grant.

In the contention-based random access as described above, in a case where the user terminal desires to transmit the UL data, the random access procedure can be started autonomously. In addition, after the UL synchronization is established, the UL data is transmitted using the UL resources that are uniquely allocated to the user terminal by the UL grant, so highly reliable UL transmission is possible.

However, in the NR, it is examined to perform the random access procedure by using fewer steps than the existing four steps. As an example, there is a random access procedure using two steps. The random access procedure using two steps are also referred to as a two-step random access procedure, a two-step RACH, or a 2-step RACH.

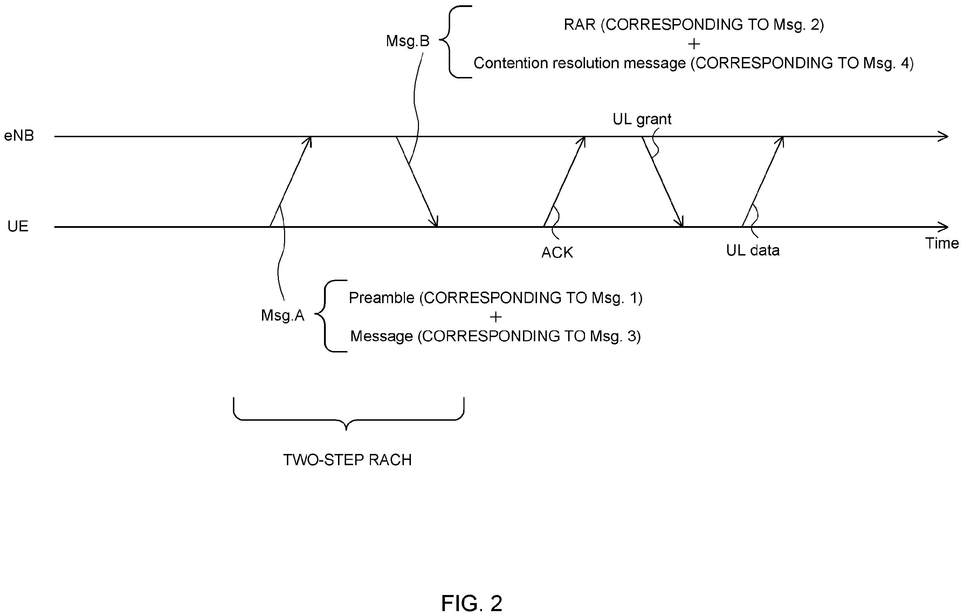

The two-step RACH may include a first step of performing transmission from the UE to the base station and a second step of performing transmission from the base station to the UE (see Fig. 2).

For example, in the first step, at least one (hereinafter, also referred to as UL signal/UL channel) of the UL signal and the UL channel including the preamble and the message may be transmitted from the UE to the base station. The preamble may be configured to serve a role similar to the message 1 (PRACH) in the existing random access procedure. The message may be configured to serve a role similar to the message 3 (PUSCH) in the existing random access procedure. Note that the preamble and the message transmitted in the first step may be referred to as a message A (Msg. A) or a first message.

In addition, in the second step, at least one (hereinafter, also referred to as DL signal/DL channel) of the DL signal and the DL channel including the response and the contention-resolution may be transmitted from the base station to the UE. The response may be configured to serve a role similar to the message 2 (random access response (RAR) transmitted by PDSCH) in the existing random access procedure. The contention-resolution may be configured to serve a role similar to the message 4 (PDSCH) in the existing random access procedure. Incidentally, the message transmitted in the second step may be referred to as a message B (Msg. B) or a second message.

How to control the transmission/reception when performing the random access procedure by using a smaller number of steps than the existing LTE system as described above becomes a problem.

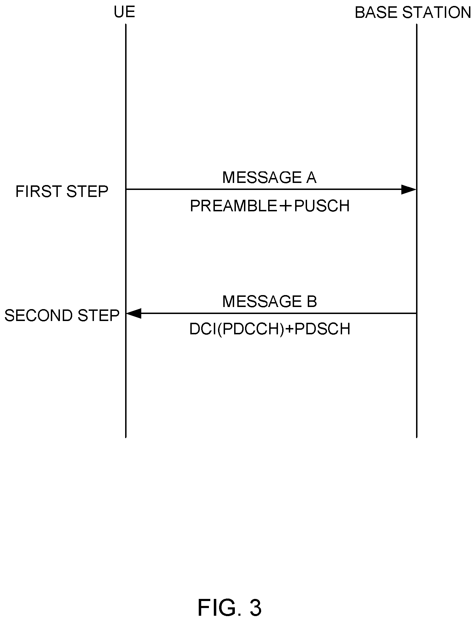

For example, it has been studied to transmit a message (corresponding to the existing message 3) in the first step by using an uplink shared channel (for example, the PUSCH) (see Fig. 3). In such a case, how to control the correspondence of the resource of the preamble and the resource of the PUSCH included in the message A becomes a problem.

In a case where the two-step RACH is applied at the time of initial connection or the like, it is necessary for the UE to grasp the preamble resource and the PUSCH resource on the basis of a broadcast channel (for example, the notification information) or the like. In this case, it is preferable to reduce the number of information bits available for notification as much as possible. Further, it is desirable to arrange the preamble resource and the PUSCH resource of the message A as close as possible, but the periodicity of the preamble resource (for example, RACH occasion) may be different from the periodicity of the UL/DL configuration (TDD configuration) or the synchronization signal block (SS/PBCH block) in TDD.

In such a case, there is a high possibility that it is difficult to flexibly control the arrangement of the PUSCH resource of the message A (the arrangement of the PUSCH resource is limited). As a result, the PUSCH resource to be set may overlap (or contention) with the DL timing or the transmission timing of another signal of a synchronization signal block or the like in the TDD configuration in the time domain.

Therefore, the present inventors have focused on the point that the arrangement of the PUSCH resource of the message A of the two-step RACH may be limited, and have conceived, as one aspect of the present disclosure, deciding the PUSCH resource used in the two-step RACH procedure in consideration of a position of a given area in a time direction. Further, the present inventors have conceived, as another aspect of the present disclosure, that a correspondence (for example, mapping) between a preamble (or another signal or channel) and a PUSCH resource is controlled in consideration of a given condition.

Hereinafter, the present embodiment will be described in detail with reference to the drawings. Each of the following aspects may be applied independently or in combination as appropriate. In the following description, a case is described in which Msg. 1 (or information corresponding to Msg. 1) and Msg. 3 (or information corresponding to Msg. 3) of the four-step RACH are included in the message A, and Msg. 2 (or information corresponding to Msg. 2) and Msg. 4 (or information corresponding to Msg. 4) of the four-step RACH are included in the message B, but the present invention is not limited thereto.

The following content may be applied to the two-step contention-based random access procedure and the two-step non-contention based random access procedure. In a case where the two-step RACH is applied to the non-contention based random access procedure, a step (zeroth step) of notifying the UE of the DL signal instructing (or a trigger) the transmission of the message A may be set before the first step.

### (First Aspect)

In a first aspect, whether the PUSCH resource used to transmit the message A is valid or invalid is determined on the basis of whether the PUSCH resource overlaps with a given area in a time direction.

The PUSCH resource (or also referred to as a PUSCH resource candidate) used for the transmission of the message A may be notified from the network (for example, the base station) to the UE in advance, or may be defined in the specification. The given area may be at least one of a DL area in the TDD configuration, an area other than the UL area in the TDD configuration, a synchronization signal block area, a given gap area, and a preamble area in the random access procedure. The present invention is not limited thereto, and an area in which another signal or channel is transmitted may be included in the given area.

A method for determining the validity of a plurality of PUSCH resources (or PUSCH resource candidates) will be described below by taking cases 1 to 5 as examples. When determining that the PUSCH resource is invalid, the UE may perform control not to use the PUSCH resource in the two-step RACH. On the other hand, when the PUSCH resource is determined to be valid, the PUSCH resource may be controlled to be used in the two-step RACH in association with a given preamble (for example, mapping a correspondence between the PUSCH resource and the preamble).

### <Case 1>

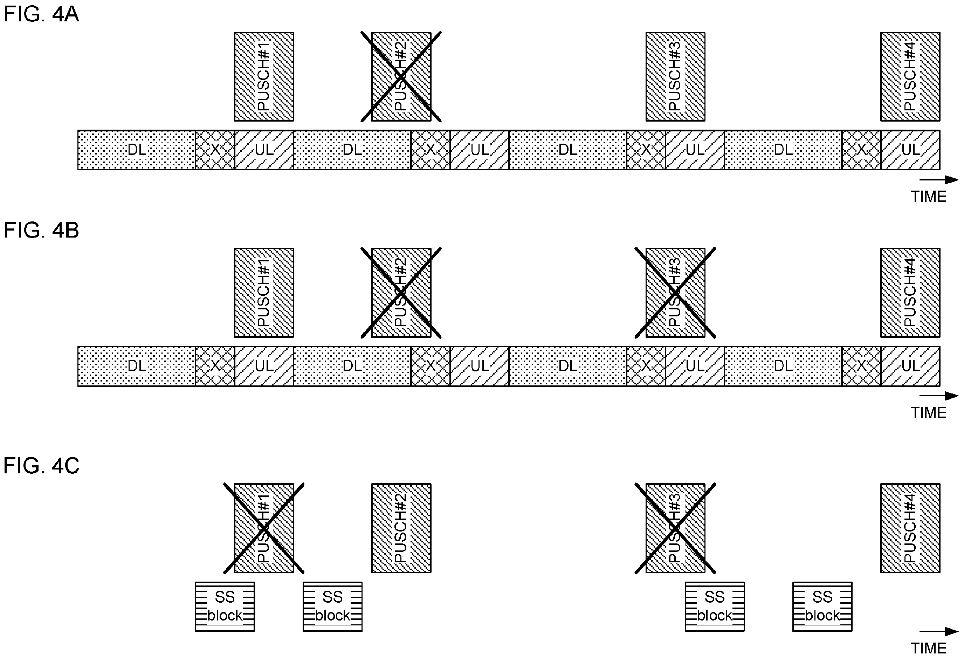

When the DL area notified by the TDD configuration (for example, the TDD configuration) and the PUSCH resource of the message A at least partially overlap in a time domain, the UE may determine that the PUSCH resource is invalid (see Fig. 4A). On the other hand, the UE may determine that the PUSCH resource which does not overlap the DL area (for example, overlaps with the UL area or a flexible area (X)) is valid.

Fig. 4A illustrates a case where the UE determines that a PUSCH resource #2 overlapping with the DL area in the time direction is invalid. On the other hand, a case is illustrated in which the UE determines that PUSCH resources #1, #3, and #4 which do not overlap the DL area in the time direction are valid.

### <Case 2>

When the area other than the UL area notified by the TDD configuration and the PUSCH resource of the message A at least partially overlap in the time domain, the UE may determine that the PUSCH resource is invalid (see Fig. 4B). The area other than the UL area may be, for example, the DL area and the flexible area (X). Fig. 4B illustrates a case where the UE determines that the PUSCH resource #2 and the PUSCH resource #3 overlapping at least one of the DL area and the flexible area in the time direction are invalid.

In case 1 or case 2, the TDD configuration (DL area, UL area, flexible area) may be notified from the network (for example, the base station) to the UE. The base station may notify the UE of the TDD configuration by using at least one of higher layer signaling and downlink control information. The higher layer signaling may be, for example, at least one of TDD-UL-DL-ConfigurationCommon and TDD-UL-DL-ConfigDedicated. For example, the UE may consider only TDD-UL-DL-ConfigurationCommon, or may consider both TDD-UL-DL-ConfigurationCommon and TDD-UL-DL-ConfigDedicated.

The downlink control information may be, for example, downlink control information (for example, DCI format 2_0) for a slot format Indicator (SFI). The information notified by the downlink control information may include "U" indicating UL transmission, "D" indicating DL transmission, and "F" (or "X") indicating flexibility not designating either UL transmission or DL transmission. When different TDD configurations are notified in the higher layer signaling and the downlink control information, the UE may determine the DL area, the UL area, and the flexible area on the basis of the information notified in either one (for example, the downlink control information).

### <Case 3>

When the synchronization signal block (for example, an SS block) area and the PUSCH resource of the message A at least partially overlap in the time domain, the UE may determine that the PUSCH resource is invalid (see Fig. 4C). On the other hand, the UE may determine that the PUSCH resource which does not overlap with the SS block area is valid.

Fig. 4C illustrates a case where the UE determines that the PUSCH resource #1 and the PUSCH resource #3 overlapping with the SS block area in the time direction are invalid, and determines that the PUSCH resource #2 and the PUSCH resource #4 not overlapping with the SS block area in the time direction are valid.

The UE may determine the SS block area on the basis of information or the like notified from the base station. For example, the UE may consider, as the SS block area, only a position where the SS block is actually arranged. Information regarding the time position (SS block index) of the SS block transmitted in the set (SS burst set) including the SS block may be notified from the base station to the UE by using higher layer signaling (For example, ssb-PositionsInBurst).

Alternatively, the UE may also consider, as the SS block area, a position of a candidate area where the SS block may be arranged. Since the SS block has different areas (or the numbers of SS block indexes serving as transmission candidates) arranged for each frequency band, the UE may decide the arrangement area of the SS block for each frequency band.

### <Case 4>

When the PUSCH resource of the message A and a given gap area at least partially overlap in the time domain, the UE may determine that the PUSCH resource is invalid. The given gap area may be a gap area set after the DL area, an area other than the UL area, or the SS block area. The given gap area may be defined in advance in the specification, or may be notified from the base station to the UE. For example, the given gap may include several symbols.

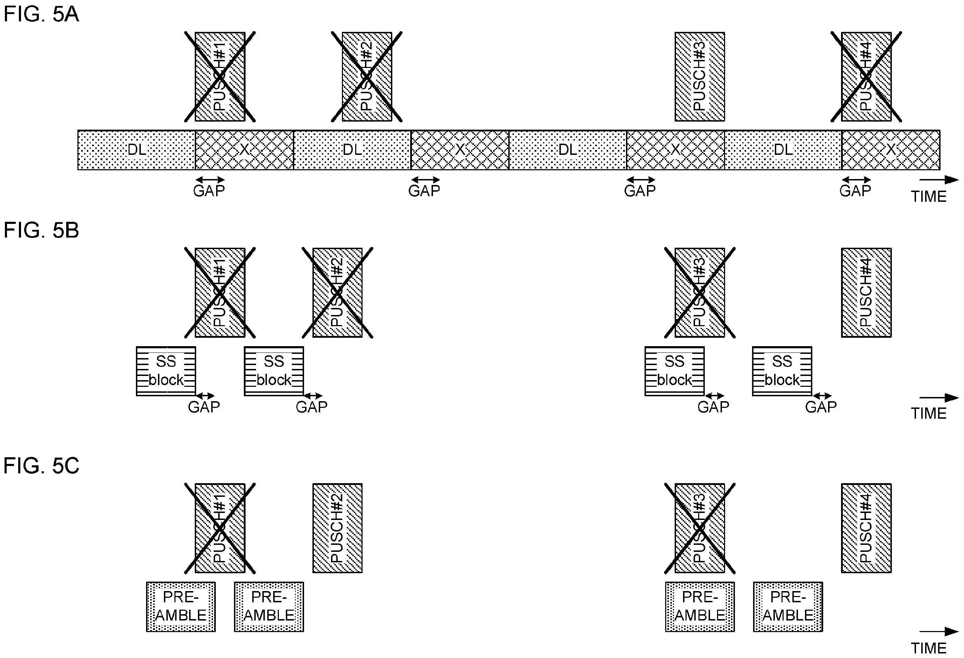

Fig. 5A illustrates a case where the given gap is set after the DL area. A case is illustrated in which the UE determines that the PUSCH resource #1, the PUSCH resource #2, and the PUSCH resource #4 overlapping at least one of the DL area and the given gap area in the time direction are invalid.

Fig. 5B illustrates a case where the given gap is set after the SS block area. A case is illustrated in which the UE determines that the PUSCH resource #1, the PUSCH resource #2, and the PUSCH resource #3 overlapping at least one of the SS block area and the given gap area in the time direction are invalid.

### <Case 5>

When the preamble area and the PUSCH resource of the message A at least partially overlap in the time domain, the UE may determine that the PUSCH resource is invalid (see Fig. 5C). Fig. 5C illustrates a case where the UE determines that the PUSCH resource #1 and the PUSCH resource #3 overlapping with the preamble area in the time direction are invalid.

The preamble area may be at least one of the preamble corresponding to the message A of the two-step RACH and the preamble corresponding to the message 1 of the four-step RACH.

In this manner, by determining that the PUSCH resource overlapping with the given area is invalid, it is possible to suppress contention of the PUSCH resource of the message A with another signal or channel in the time domain. As a result, it is possible to reduce failure of the two-step RACH and suppress deterioration in communication quality.

Incidentally, in above case, the PUSCH resource is determined to be invalid when at least a part (for example, even one symbol) of the PUSCH resource of the message A overlaps with the given area in the time direction. However, the present invention is not limited to this case. The two-step RACH procedure may be controlled to be performed using a part of the PUSCH resource that does not overlap with the given area (or determining that a part that does not overlap is valid).

Further, the UE may use any one of cases 1 to 5, or may use some or all of cases 1 to 5 in combination. In this case, the given area may be defined in advance in the specification or may be set from the base station to the UE by higher layer signaling or the like.

### (Second Aspect)

In a second aspect, control of association (also referred to as mapping) between the PUSCH resource of the message A and the preamble will be described.

In the second aspect, a case is described in which the association of the PUSCH resource and the preamble (or a preamble resource and a preamble index) is performed after the validity or invalidity of each PUSCH resource is determined as described in the first aspect. However, the applicable case is not limited thereto.

After determining whether each PUSCH resource is valid or invalid, the UE may decide a correspondence with a given preamble for a valid (or not invalid) PUSCH resource. That is, the correspondence between the PUSCH resource and the preamble may be mapped for the valid PUSCH resource.

The PUSCH resource may be replaced with a DMRS port (or a DMRS port group) of the PUSCH. Further, the preamble may be replaced with a preamble resource or a preamble index.

That is, the correspondence between the PUSCH resource and the preamble may be at least one of the correspondence between the PUSCH resource and the preamble resource, the correspondence between the PUSCH resource and the preamble index, the correspondence between the DMRS port of the PUSCH and the preamble resource, and the correspondence between the DMRS port of the PUSCH and the preamble index.

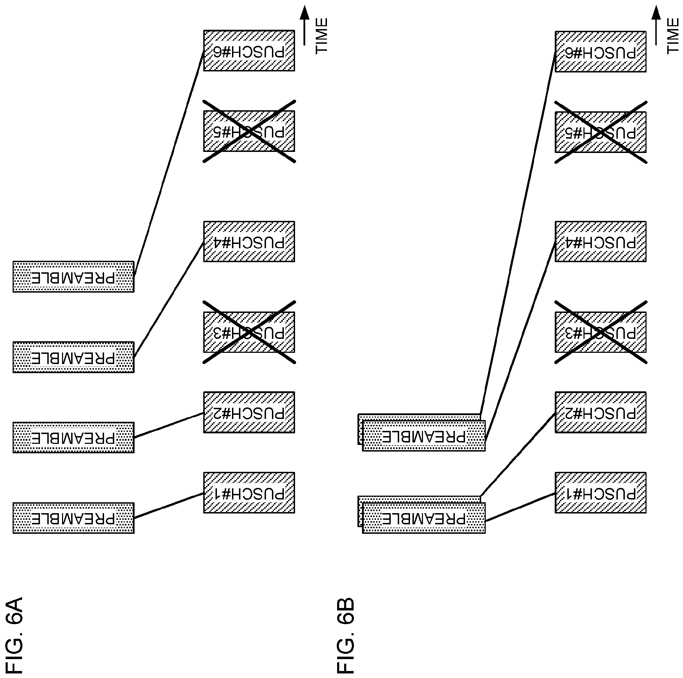

Fig. 6A is a diagram illustrating an example of the association (mapping) between the PUSCH resource (for example, a PUSCH resource that does not overlap with the given area) determined to be valid and the preamble. Here, a case is illustrated in which it is determined that PUSCH resources #3 and #5 among a plurality of PUSCH resources #1 to #6 (or PUSCH resource candidates #1 to #6) are invalid.

In this case, the UE maps the given preamble (or the correspondence between the PUSCH resource and the preamble) for the PUSCH resources #1, #2, #4, and #6. For example, as illustrated in Fig. 6A, the PUSCH resource determined to be valid may be associated with each preamble resource (or RACH occasion).

In a case where the PUSCH resource does not exist in the given time domain range with respect to the given preamble resource due to a case where a plurality of PUSCH resources continuous in the time direction becomes invalid or the like, the PUSCH resource may not be mapped to the given preamble resource.

Alternatively, the preamble index may be classified into a given group, and each of the classified groups may be associated with a different PUSCH resource (see Fig. 6B). Here, in each preamble resource (or RACH occasion), a case is illustrated in which the preamble indexes are classified into two groups, and the preamble indexes are associated with PUSCH resources different by half. Note that the number of classifications of the preamble indexes is not limited to two.

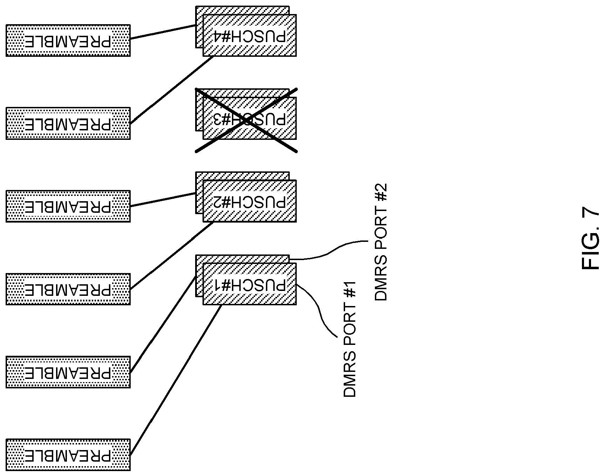

Alternatively, when a plurality of DMRS ports correspond to the PUSCH resource, the preamble may be mapped for each DMRS port (see Fig. 7). Fig. 7 illustrates a case where two DMRS ports (here, DMRS ports #1 and #2) correspond to each PUSCH resource. The number of DMRS ports corresponding to each PUSCH is not limited to two, and may be three or more.

Note that, in the above description, a case is described in which the preamble and the PUSCH resource are associated with each other, but the present invention is not limited thereto. The PUSCH resource may be associated with another signal or channel. For example, a given synchronization signal block may be mapped for the PUSCH resource (or a DMRS port corresponding to the PUSCH) determined to be valid. That is, the correspondence between the SS block (for example, at least one of the SS block index and the SS block resource) and the PUSCH resource or the DMRS port corresponding to the PUSCH may be mapped for the valid PUSCH resource.

### (Third Aspect)

In a third aspect, control of the arrangement position of the PUSCH resource determined to be invalid will be described.

In the third aspect, a case is described in which the position (for example, a position in the time direction) of the PUSCH resource determined to be invalid is changed after the validity or invalidity of each PUSCH resource is determined as described in the first aspect. However, the applicable case is not limited thereto.

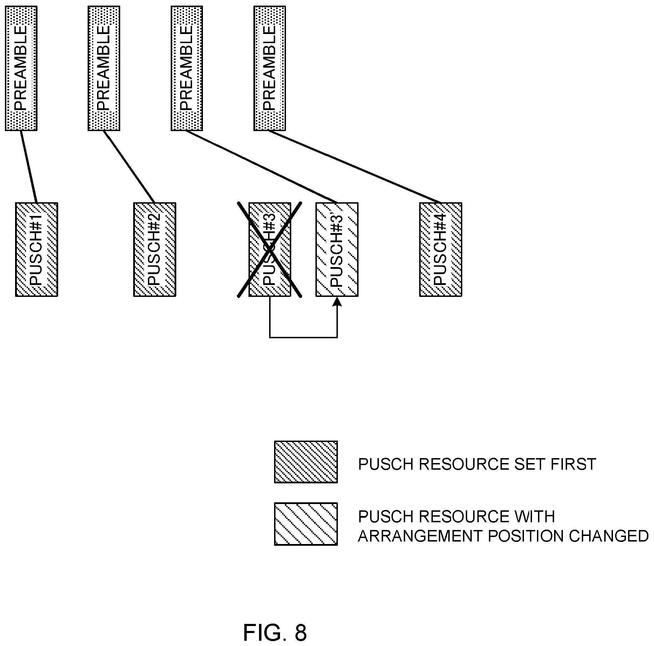

After determining whether each PUSCH resource is valid or invalid, the UE may change the arrangement position of the invalid (or not valid) PUSCH resource and use the PUSCH resource for transmitting the message A (see Fig. 8). Fig. 8 illustrates a case where the position of the PUSCH resource #3 determined to be invalid in the time direction is changed, and the given preamble (at least one of the preamble index and the preamble resource) is associated with a PUSCH resource #3' after the change.

The frequency positions of the PUSCH resource #3 before the change and the PUSCH resource #3' after the change may be the same. Of course, both the time position and the frequency position may be changed before and after the change of the PUSCH resource position.

Further, the UE may control the change of the PUSCH resource position in the time direction on the basis of a given condition. The given condition may be not overlapping with at least one area of the DL area in the TDD configuration, the area other than the UL area in the TDD configuration, the synchronization signal block area, the given gap area, and the preamble area in the random access procedure.

For example, the UE may control the PUSCH resource determined to be invalid to be arranged in the UL area of the next TDD configuration. In this case, the changed PUSCH resource may be arranged at a given position in the UL area. The given position in the UL area may be a position including the first time position (for example, the start symbol) in the UL area, or may be a position including the last time position (for example, the end symbol) in the UL area. Alternatively, the position where the changed PUSCH resource is positioned may be defined in advance in the specification, or may be notified from the network to the UE.

Alternatively, the UE may perform control such that the PUSCH resource determined to be invalid is arranged in the flexible (X) area of the next TDD configuration. In this case, the changed PUSCH resource may be arranged at a given position in the flexible area. The given position in the flexible region may be a position including the first time position (for example, the start symbol) of the flexible area, or may be a position including the last time position (for example, the end symbol) of the flexible area. Alternatively, the position where the changed PUSCH resource is positioned may be defined in advance in the specification, or may be notified from the network to the UE.

Alternatively, the UE may decide the changed PUSCH resource #3' position on the basis of the next PUSCH resource (the PUSCH resource #4 in Fig. 8) of the PUSCH resource #3 determined to be invalid. For example, the position of the PUSCH resource #3' may be defined in the specification as a relative position from the PUSCH resource #4, or an offset or the like may be notified from the network to the base station.

As an example, the PUSCH resource #3' may be arranged immediately before the position of the PUSCH resource #4 (for example, an area including a symbol immediately before the start symbol of the PUSCH resource #4). In this manner, by controlling the position of the PUSCH resource to be changed in consideration of the next PUSCH resource position, it is possible to prevent overlap with other PUSCH resources, positional difference, and the like.

In this manner, by changing the position of the PUSCH resource determined to be invalid, each preamble can be associated with PUSCH resources close thereto in the time direction.

Note that, in the above description, a case is described in which the preamble and the PUSCH resource are associated with each other, but the present invention is not limited thereto. The PUSCH resource may be associated with another signal or channel. For example, a given synchronization signal block may be mapped for the PUSCH resource (or a DMRS port corresponding to the PUSCH) determined to be valid. That is, the correspondence between the SS block and the PUSCH resource or the DMRS port corresponding to the PUSCH may be mapped for the valid PUSCH resource.

### (Fourth Aspect)

In a fourth aspect, a case is described in which the correspondence between each PUSCH resource and the preamble is determined regardless of whether the PUSCH resource is valid or invalid.

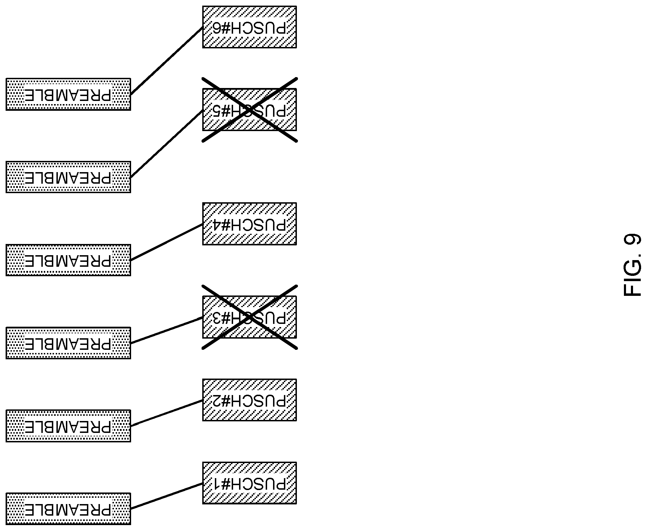

In the fourth aspect, the correspondence between the PUSCH resource and the preamble is decided regardless of (alternatively, without making a determination or before making a determination) the judging on whether each PUSCH resource is valid or invalid as described in the first aspect. That is, the preamble is associated with both the valid PUSCH resource and the invalid PUSCH resource (see Fig. 9).

Fig. 9 illustrates a case where the PUSCH resource #3 and the PUSCH resource #5 become invalid (or not valid). In this case, the UE may perform control such that the two-step RACH using the invalid PUSCH resources is not performed.

When the UE selects the PUSCH resource #3 (or a preamble corresponding to the PUSCH resource #3), the UE may perform the random access procedure by switching (or fallback) to the four-step RACH instead of the two-step RACH. In this case, the UE may transmit only the preamble (message 1) and attempt to receive the message 2 (RAR) serving as a response signal of the preamble.

As a result, even when there is no PUSCH resource for the message A selectable by the UE, it is possible to perform the random access procedure using the four-step RACH. Further, since the correspondence between the PUSCH resource and the preamble can be decided regardless of whether the PUSCH resource is valid or invalid, the mapping between the PUSCH resource and the preamble can be simplified.

Note that, in the above description, a case is described in which the preamble and the PUSCH resource are associated with each other, but the present invention is not limited thereto. The PUSCH resource may be associated with another signal or channel. For example, a given synchronization signal block may be mapped for the PUSCH resource (or a DMRS port corresponding to the PUSCH.). That is, the correspondence between the SS block and the PUSCH resource or the DMRS port corresponding to the PUSCH may be mapped for the PUSCH resource.

### <Other Aspects>

The contents described below may be appropriately applied to the configurations described in the first to fourth aspects.

### <PUSCH Resource Allocation of Message A>

The allocation position of the PUSCH resource of the message A may be set in the UE in advance. For example, information (also referred to as a PUSCH resource set) related to at least one of the periodicity of the PUSCH resource, the offset, the starting position in a given time unit (for example, a slot), and the PUSCH length may be notified from the base station to the UE by higher layer signaling or the like.

For example, similarly to the notification method of the preamble resource in the four-step RACH, the position of the time resource of the PUSCH may be notified to the UE by using the RACH configuration table. In this case, a base station may separately notify the UE of a change in the periodicity of the PUSCH, offset, or the like. Alternatively, a table designating the PUSCH resource of the message A may be defined.

Alternatively, the UE may decide the position of the PUSCH resource by an offset (for example, at least one of a time offset and a frequency offset) from the preamble resource (For example, RACH occasion) or the like. The offset may be defined in the specification or may be notified from the base station to the UE. Note that the allocation of the PUSCH resources is not limited thereto.

### <Correspondence between Preamble and PUSCH Resource or the like >

Note that, in the first to fourth aspects, a case where one corresponding PUSCH resource or DMRS port is determined when the preamble resource and the preamble index are determined is described regarding the correspondence between the preamble and the PUSCH resource. However, the correspondence is not limited thereto. For example, when the preamble resource and the preamble index are determined, a plurality of (for example, ten) corresponding PUSCH resources or DMRS ports may be determined. In this case, the UE may randomly select a given PUSCH resource or DMRS port from the plurality of corresponding PUSCH resources or DMRS ports to transmit the message A. Such a configuration can be similarly applied to a case where a correspondence between another signal or channel and the PUSCH resource (or the DMRS port corresponding to the PUSCH.) is determined.

### <Mapping Order of Preamble and PUSCH Resource and the like>

The UE may control the mapping for the correspondence between the preamble (the preamble resource and the preamble index) and the PUSCH resource (or the DMRS port of the PUSCH) on the basis of the following order.

Each preamble may be associated with the PRACH resource in the following order (1) to (3).
(1) The next preamble index in the preamble resource (RACH occasion) of the message A
(2) The next preamble resource in the frequency direction (RACH occasion)
(3) The next preamble resource in the time direction

### (PRACH occasion)

Each PUSCH resource may be associated with the preamble in the following order (1) to (3).
(1) The next DMRS port in the PUSCH resource of the message A
(2) The next PUSCH resource in the frequency direction
(3) The next PUSCH resource in the time direction

For example, the base station may notify the UE of the ratio of the correspondence between the preamble (the preamble resource and the preamble index) and the PUSCH resource (or the DMRS port of the PUSCH), or the ratio may be specified in the specification. For example, as illustrated in Fig. 6B, in a case where a plurality of (X) preamble indexes are associated with a given number of (Y (Y = 1 in Fig. 6)) PUSCH resources, a correspondence (or a ratio of X and Y) between X and Y may be defined in the specification, or may be notified to the UE. Further, as another example, in a case where the plurality of (X) preamble resources are associated with the given number of (Y) PUSCH resources or DMRS ports of the PUSCH, a correspondence (or the ratio of X and Y) between X and Y may be defined in the specification, or may be notified to the UE.

Such a mapping order can be similarly applied to a case where the correspondence between another signal or channel and the PUSCH resource (or the DMRS port corresponding to the PUSCH) is determined.

Of course, the mapping order is not limited thereto.

### (Radio Communication System)

Hereinafter, a configuration of a radio communication system according to one embodiment of the present disclosure will be described. In this radio communication system, communication is performed using one or a combination of the radio communication methods according to the embodiment of the present disclosure.

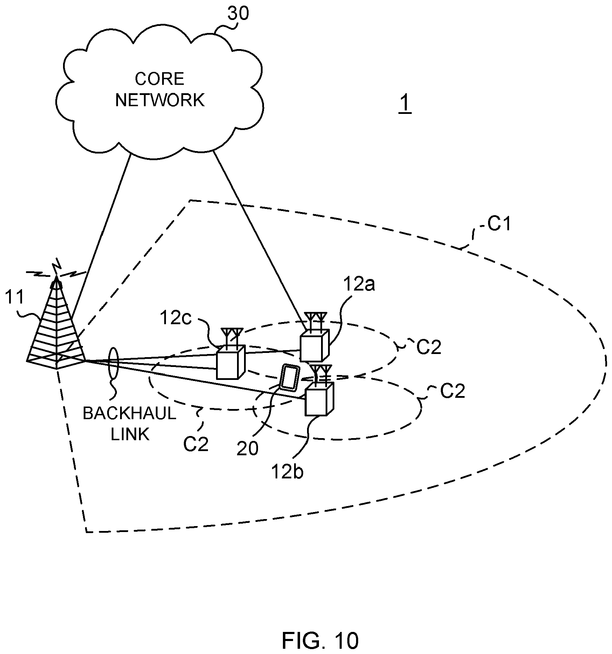

Fig. 10 is a diagram illustrating an example of a schematic configuration of the radio communication system according to one embodiment. A radio communication system 1 may be a system that implements communication by using long term evolution (LTE), 5th generation mobile communication system new radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity (for example, dual connectivity (NR-NR dual connectivity (NN-DC) in which both MN and SN are NR base stations (gNB)) between a plurality of base stations in the same RAT.

The radio communication system 1 may include a base station 11 that forms a macro cell C1 with a relatively wide coverage, and base stations 12 (12a to 12c) that are arranged within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that, the frequency ranges, definitions, and the like of FR1 and FR2 are not limited to these, and for example, FR1 may be a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication schemes such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by each user terminal 20, a physical broadcast channel (PBCH), a physical downlink control channel (PDCCH), or the like may be used.

Further, in the radio communication system 1, as an uplink channel, a physical uplink shared channel (PUSCH) shared by each user terminal 20, a physical uplink control channel (PUCCH), a physical random access channel (PRACH), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor CORESET associated with a certain search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a user terminal-specific reference signal (UE-specific reference signal).

### (Base Station)

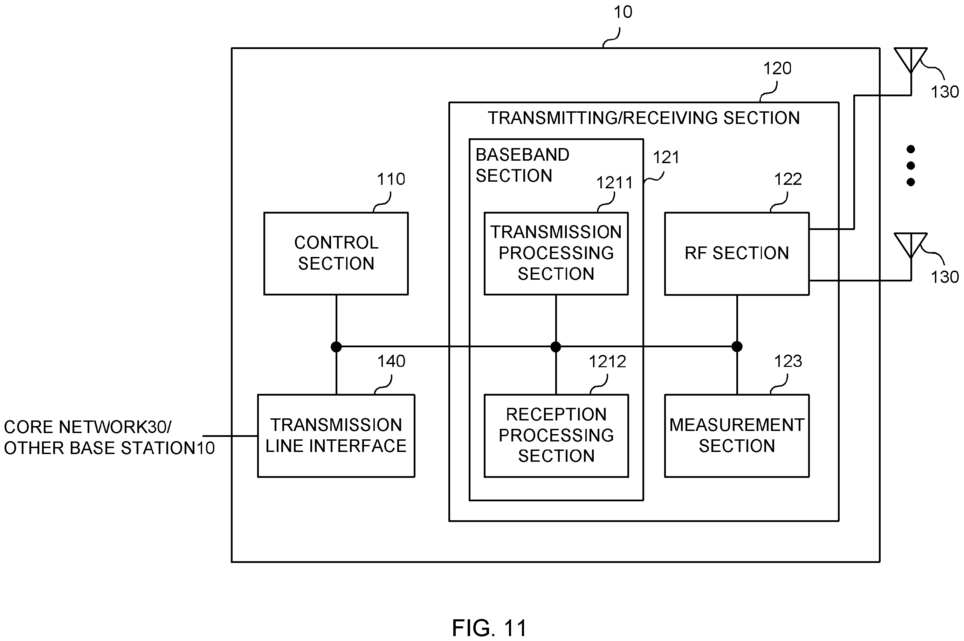

Fig. 11 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be configured by a controller, a control circuit, and the like, which are described on the basis of common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be forwarded as a signal, control information, a sequence, and the like, and may transfer the data, the control information, the sequence, and the like to the transmitting/receiving section 120. The control section 110 may perform call processing (such as configuration or releasing) of a communication channel, management of the state of the base station 10, management of a radio resource, and the like.

The transmitting/receiving section 120 may include a base band section 121, a radio frequency (RF) section 122, and a measurement section 123. The base band section 121 may include a transmission processing section 1211 and a reception processing section 1212. The transmitting/receiving section 120 can be configured by a transmitter/receiver, an RF circuit, a base band circuit, a filter, a phase shifter, a measurement circuit, a transmission/reception circuit, and the like, which are described on the basis of common recognition in the technical field to which the present disclosure relates.

The transmitting/receiving section 120 may be configured as an integrated transmitting/receiving section, or may be configured by a transmitting section and a receiving section. The transmitting section may be configured by the transmission processing section 1211 and the RF section 122. The receiving section may be configured by the reception processing section 1212, the RF section 122, and the measurement section 123.

The transmission/reception antenna 130 can be configured by an antenna such as an array antenna which is described on the basis of common recognition in the technical field to which the present disclosure relates.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

On the other hand, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may perform acquisition, transmission, and the like of user data (user plane data), control plane data, and the like for the user terminal 20.

Note that, the transmitting section and the receiving section of the base station 10 in the present disclosure may be configured by at least one of the transmitting/receiving section 120, the transmission/reception antenna 130, and the transmission line interface 140.

Incidentally, the transmitting/receiving section 120 receives the first message (for example, the message A) in the two-step random access procedure. The message A may be transmitted by using the uplink shared channel resource and the preamble. Further, the transmitting/receiving section 120 transmits a second message (for example, the message B) transmitted in response to the first message (for example, the message A).

The control section 110 may determine whether or not each uplink shared channel resource is used for the two-step RACH on the basis of whether or not a given area overlaps with a plurality of preset uplink shared channel resources in the time direction.

### (User Terminal)

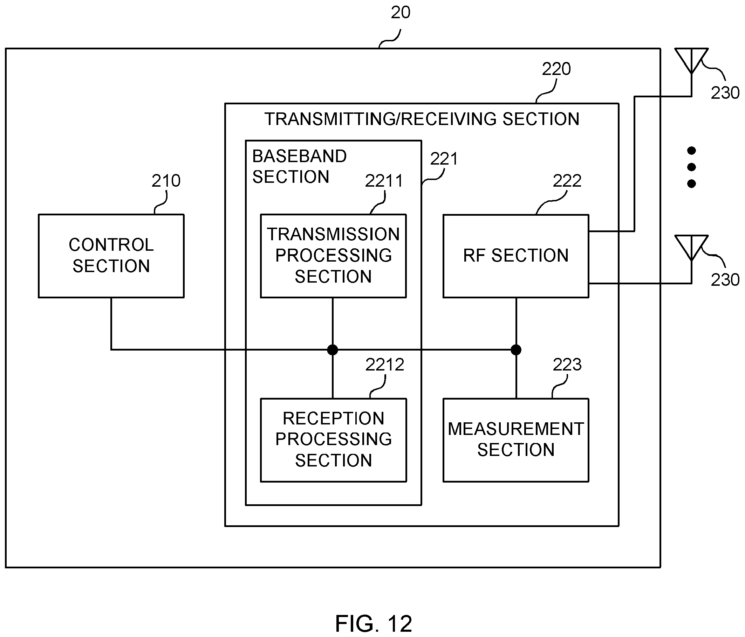

Fig. 12 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be configured by a controller, a control circuit, and the like, which are described on the basis of common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may forward the data, the control information, the sequence, and the like to the transmitting/receiving section 220.

The transmitting/receiving section 220 may include a base band section 221, an RF section 222, and a measurement section 223. The base band section 221 may include a transmission processing section 2211 and a reception processing section 2212. The transmitting/receiving section 220 can be configured by a transmitter/receiver, an RF circuit, a base band circuit, a filter, a phase shifter, a measurement circuit, a transmission/reception circuit, and the like, which are described on the basis of common recognition in the technical field to which the present disclosure relates.

The transmitting/receiving section 220 may be configured as an integrated transmitting/receiving section, or may be configured by a transmitting section and a receiving section. The transmitting section may be configured by the transmission processing section 2211 and the RF section 222. The receiving section may be configured by the reception processing section 2212, the RF section 222, and the measurement section 223.

The transmission/reception antenna 230 can be configured by an antenna such as an array antenna which is described on the basis of common recognition in the technical field to which the present disclosure relates.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a base band signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

On the other hand, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired base band signal.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmission/reception antenna 230.

Incidentally, the transmitting/receiving section 220 transmits the first message (for example, the message A) by using the uplink shared channel resource and the preamble. The transmitting/receiving section 220 receives the second message (for example, the message B) transmitted in response to the message A.

The control section 210 may decide the uplink shared channel resource used in the two-step random access procedure in consideration of the position of the given area in the time direction. For example, the control section 210 may determine the validity or invalidity of each uplink shared channel resource on the basis of whether or not a given area overlaps with a plurality of preset uplink shared channel resources in the time direction.

Further, the control section 210 may associate the uplink shared channel resource determined to be valid with a given preamble. Further, the control section 210 may change the arrangement position of the uplink shared channel resource determined to be invalid and associate the uplink shared channel resource with the given preamble.

The control section 210 may decide the correspondence between the preamble and the uplink shared channel resource regardless of whether the given area and the uplink shared channel resource overlap in the time direction.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, determining, deciding, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

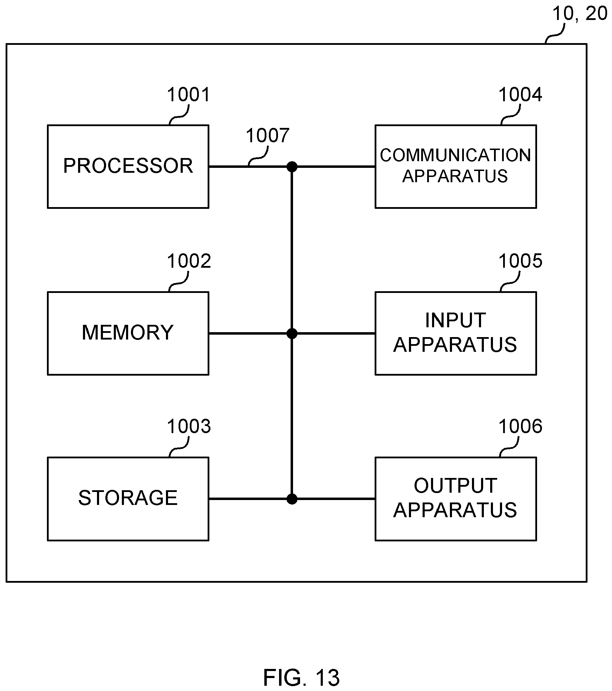

For example, the base station, the user terminal, and the like according to one embodiment of the present disclosure may function as a computer that executes the processing of the radio communication method of the present disclosure. Fig. 13 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods by two or more processors. Note that the processor 1001 may be implemented with one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, operating an operating system. The processor 1001 may be configured by a central processing unit (CPU) including an interface with peripheral equipment, a control device, an operation device, a register, and the like. For example, at least a part of the above-described control section 110(210), transmitting/receiving section 120(220), and the like may be implemented by the processor 1001.

The processor 1001 reads a program (program code), a software module, data, and the like from at least one of the storage 1003 and the communication apparatus 1004 into the memory 1002, and executes various pieces of processing in according therewith. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be configured by, for example, at least one of a read only memory (ROM), an erasable programmable ROM (EPROM), an electrically EPROM (EEPROM ), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be configured by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmission/reception device) for allowing inter-computer communication by using at least one of a wired network and a wireless network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120(220), the transmission/reception antenna 130(230), and the like described above may be implemented by the communication apparatus 1004. The transmitting/receiving section 120(220) may be implemented by physically or logically separating a transmitting section 120a(220a) and a receiving section 120b(220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, and the like). Note that the input apparatus 1005 and the output apparatus 1006 may be provided in an integrated structure (for example, a touch panel).

Each apparatus such as the processor 1001 and the memory 1002 is connected by the bus 1007 for communicating information. The bus 1007 may be configured by a single bus, or may be configured by buses that vary between apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and a part or all of each functional block may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or a plurality of periods (frames) in a time domain. Each of the one or plurality of periods (frames) included in the radio frame may be referred to as a subframe. Further, the subframe may include one or more slots in the time domain. The subframe may be a fixed time length (for example, 1 ms) not dependent on numerology.

Here, the numerology may be a communication parameter applied to at least one of transmission and reception of a signal or a channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in the time domain, and the like.

A slot may be configured by one or a plurality of symbols in the time domain (orthogonal frequency division multiplexing (OFDM) symbols, single carrier frequency division multiple access (SC-FDMA) symbols, and the like). Also, a slot may be a time unit based on the numerology.

A slot may include a plurality of mini slots. Each mini slot may include one or a plurality of symbols in the time domain. Further, the mini slot may be referred to as a sub slot. Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of contiguous subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a slot, a mini slot, or the like, instead of a subframe.

Here, a TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of the TTI is not limited to this.

The TTI may be a transmission time unit of channel-encoded data packets (transport blocks), code blocks, codewords, or the like, or may be a unit of processing in scheduling, link adaptation, and so on. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) configuring the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a sub slot, a slot, and the like.

Note that a long TTI (for example, a normal TTI, a subframe, or the like) may be replaced with a TTI having a time length exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of contiguous subcarriers in the frequency domain. The number of subcarriers included in the RB may be the same regardless of the numerology, and may be twelve, for example. The number of subcarriers included in the RB may be decided on the basis of the numerology.

Further, the RB may include one or a plurality of symbols in the time domain, and may have a length of one slot, one mini slot, one subframe, or one TTI. One TTI, one subframe, and the like each may be configured by one or a plurality of resource blocks.

Note that one or a plurality of RBs may be referred to as a physical resource block (physical RB (PRB)), a subcarrier group (SCG), a resource element group (REG), a PRB pair, an RB pair, or the like.

Further, a resource block may include one or a plurality of resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that "cell", "carrier", and the like in the present disclosure may be replaced with "BWP".

Note that the structures of the above-described radio frame, subframe, slot, mini slot, symbol, and the like are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols and chips, all of which may be referenced throughout the above description, may be represented by voltages, currents, electromagnetic waves, magnetic fields or particles, optical fields or photons, or any combination of these.

Information, signals, and the like can be output in at least one of a direction from a higher layer to a lower layer and a direction from a lower layer to a higher layer. Information, signals, and the like may be input and output via a plurality of network nodes.

The information, signals, and the like that are input and output may be stored in a specific location (for example, a memory), or may be managed using a management table. The information, signal, and the like to be input and output can be overwritten, updated or appended. The output information, signal, and the like may be deleted. The information, signals, and the like that are input may be transmitted to another apparatus.

Notification of information may be performed by not only using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of MAC signaling may be performed using, for example, a MAC control element (MAC CE).

Further, notification of given information (for example, notification of "being X") is not limited to explicit notification but may be performed implicitly (for example, by not performing notification of the given information or by performing notification of another piece of information).

Judging may be performed using values represented by one bit (0 or 1), may be performed using Boolean values represented by true or false, or may be performed by comparing numerical values (for example, comparison with a given value).

Regardless of whether referred to as software, firmware, middleware, microcode, or hardware description language, or referred to by other names, software should be broadly interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, a reception apparatus, a radio communication apparatus, and the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, the operation performed by the base station may be performed by an upper node thereof in some cases. In a network including one or a plurality of network nodes including the base station, it is clear that various operations performed to communicate with terminals may be performed by the base station, one or a plurality of network nodes other than the base station (for example, mobility management entity (MME), serving-gateway (S-GW), and the like are conceivable, but there is no limitation), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined (for example, a combination of LTE or LTE-A and 5G) and applied.

The term "on the basis of" used in the present disclosure does not mean "only on the basis of" unless otherwise specified. In other words, the term "on the basis of" means both "only on the basis of" and "at least on the basis of".

Any reference to an element using designations such as "first" and "second" used in the present disclosure does not generally limit the amount or order of these elements. These designations may be used in the present disclosure only for convenience, as a method for distinguishing between two or more elements. In this way, reference to the first and second elements does not imply that only two elements may be employed, or that the first element must precede the second element in some way.

The term "determining (deciding)" used in the present disclosure may include a wide variety of operations. For example, "determining (deciding)" may be regarded as "determining (deciding)" of judging, calculating, computing, processing, deriving, investigating, looking up, search, inquiry (for example, looking up in a table, database, or another data structure), ascertaining, and the like.

Further, "determining (deciding)" may be regarded as "determining (deciding)" of receiving (for example, receiving information), transmitting (for example, transmitting information), input, output, accessing (for example, accessing data in a memory), and the like.

Further, "determining (deciding)" may be regarded as "determining" of resolving, selecting, choosing, establishing, comparing, and the like. That is, "determining (deciding)" may be regarded as "determining (deciding)" some operations.

Further, "determining (deciding)" may be replaced with "assuming", "expecting", "considering", and the like.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

In the present disclosure, when two elements are connected, these elements may be considered "connected" or "coupled" to each other by using one or more electrical wires, cables, printed electrical connections, and the like or by using, as some non-limiting and non-inclusive examples, electromagnetic energy having wavelengths in a radio frequency domain, a microwave domain, and an optical (both visible and invisible) domain, or the like.

In the present disclosure, the description of "A and B are different" may mean "A and B are different from each other". Note that the description may mean that "A and B are different from C". The terms such as "separated", "coupled", and the like may be interpreted as "different".

When the terms such as "include", "including", and variations of these are used in the present disclosure, these terms are intended to be inclusive, in a manner similar to the way the term "comprising" is used. Further, the term "or" as used in the present disclosure is intended to be not an exclusive-OR.

In the present disclosure, for example, when translations add articles, such as a, an, and the in English, the present disclosure may include that the noun that follows these articles is in the plural.

Although the invention according to the present disclosure has been described in detail above, it is obvious to a person skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Therefore, the description in the present disclosure is provided for the purpose of describing examples, and thus, should by no means be construed to limit the invention according to the present disclosure in any way.

## Claims

1. A user terminal comprising:
a control section that decides an uplink shared channel resource to be used in a two-step random access procedure in consideration of a position of a given area in a time direction; and
a transmitting section that transmits a first message by using the decided uplink shared channel resource and a preamble.

2. The user terminal according to claim 1, wherein
the control section determines validity or invalidity of each uplink shared channel resource on a basis of whether or not a plurality of preset uplink shared channel resources and the given area overlap in the time direction.

3. The user terminal according to claim 2, wherein
the control section associates an uplink shared channel resource determined to be valid with a given preamble.

4. The user terminal according to claim 2 or 3, wherein
the control section changes an arrangement position of an uplink shared channel resource determined to be invalid and associates the uplink shared channel resource with a given preamble.

5. The user terminal according to claim 1, wherein
the control section decides a correspondence between the preamble and the uplink shared channel resource regardless of whether or not the given area and the uplink shared channel resource overlap in the time direction.

6. A radio communication method comprising:
deciding an uplink shared channel resource to be used in a two-step random access procedure in consideration of a position of a given area in a time direction; and
transmitting a first message by using the decided uplink shared channel resource and a preamble.
